# EUROPEAN PATENT APPLICATION

(11) **EP 4 574 759 A1**
(43) Date of publication of application: **25.06.2025**
(21) Application number: 24214189.3
(22) Date of filing: 20.11.2024
(51) Int. Cl.: C01B 32/168, B82Y 30/00, C01B 32/174, C09D 5/24, C09K 23/00, C09K 23/48, C09K 23/50, C09K 23/52

(54) **CARBON NANOTUBE DISPERSION LIQUID**

(30) Priority: 20.12.2023 JP 2023214427
(71) Applicant: Kabushiki Kaisha F.C.C., Hamamatsu-shi, Shizuoka 431-1394 (JP)
(72) Inventor: Ogawa, Ayumu, Hamamatsu-shi, Shizuoka, 4311394 (JP); Iida, Kaoru, Hamamatsu-shi, Shizuoka, 4311394 (JP); Amma, Yuto, Hamamatsu-shi, Shizuoka, 4311394 (JP)
(74) Representative: Grünecker Patent- und Rechtsanwälte PartG mbB

(57) **Abstract**

A carbon nanotube dispersion liquid includes carbon nanotubes (10) with an average fiber length of 10 µm or more, an aqueous solvent, and a dispersant (20) that is soluble in the aqueous solvent and has a weight-average molecular weight of 600000 or more. A content of the dispersant (20) is 10 parts by mass or more and 500 parts by mass or less relative to 100 parts by mass of the carbon nanotubes (10).

## Description

### BACKGROUND OF THE INVENTION

### 1. Field of the Invention

The present invention relates to carbon nanotube dispersion liquids.

### 2. Description of the Related Art

Conventionally, for example, a carbon nanotube (hereinafter also referred to as "CNT") dispersion liquid in which CNTs are dispersed in a predetermined solvent has been generally used as a conductive auxiliary agent of a secondary battery or the like. Conventional references in regard to this include Japanese Patent No. 6274309 and Japanese Patent No. 6079138. For example, Japanese Patent No. 6274309 describes a CNT dispersion liquid including CNTs, a dispersant with a weight-average molecular weight of 1000 to 400000, a volatile salt, and an aqueous solvent. In addition, Japanese Patent No. 6274309 discloses that CNTs with an average fiber length of 10 µm or less are preferable as the CNTs described above.

### SUMMARY OF THE INVENTION

From the viewpoints of improving the conductivity and the like, it has been demanded to use CNTs with longer fiber length (for example, an average fiber length of 10 µm or more) in the CNT dispersion liquid. According to the present inventors' examination, however, the CNTs with the long fiber length tend to get entangled and aggregate in the aqueous solvent. Therefore, sudden thickening occurs in a dispersion process, making the dispersion itself difficult or the viscosity of the CNT dispersion liquid becomes too high, making it difficult to handle.

Example embodiments of the present invention provide carbon nanotube dispersion liquids including carbon nanotubes with an average fiber length of 10 µm or more, in which thickening is reduced or prevented.

According to an example embodiment of the present invention, a carbon nanotube dispersion liquid includes carbon nanotubes with an average fiber length of 10 µm or more, an aqueous solvent, and a dispersant that is soluble in the aqueous solvent and has a weight-average molecular weight of 600000 or more, in which a content of the dispersant is 10 parts by mass or more and 500 parts by mass or less relative to 100 parts by mass of the carbon nanotubes.

With the use of the dispersant with the large weight-average molecular weight as described above, the aggregation of the carbon nanotubes can be reduced or prevented and the dispersibility of the carbon nanotubes can be improved relatively compared to the case of using the dispersant as described in Japanese Patent No. 6274309, for example. As a result, even when the carbon nanotubes with an average fiber length of 10 µm or more are included, the thickening of the carbon nanotube dispersion liquid can be reduced or prevented.

According to example embodiments of the present invention, carbon nanotube dispersion liquids including the carbon nanotubes with an average fiber length of 10 µm or more, in which thickening is reduced or prevented, can be provided.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a schematic diagram of a CNT dispersion liquid.
FIG. 2 is a graph expressing the viscosity of a CNT dispersion liquid in a case of using a CNT 3 (CNTs with an average fiber length of 250 µm).

### DETAILED DESCRIPTION OF THE EXAMPLE EMBODIMENTS

Example embodiments of the present invention will be described below with reference to the drawings. Note that the example embodiments described herein do not limit the present invention in particular as a matter of course. The elements, features, characteristics, etc., with the same operation are denoted by the same reference signs and the overlapping description may be omitted or simplified as appropriate. Moreover, in the present specification, the notation "X to Y" (X and Y are arbitrary numerals) for a range signifies a value more than or equal to X and less than or equal to Y, and is meant to encompass also the meaning of being "more than X" and "less than Y".

A CNT dispersion liquid according to this example embodiment includes (A) CNTs with an average fiber length of 10 µm or more, (B) an aqueous solvent, and (C) a dispersant that is soluble in the aqueous solvent and has a weight-average molecular weight of 600000 or more. The CNT dispersion liquid according to this example embodiment may further include another optional component, for example (D) an additive or the like, as necessary.

A CNT is fibrous carbon with a structure in which graphite constituting graphene is rounded into a tubular shape. CNTs are not limited in particular except that the average fiber length is 10 µm or more, and one kind, or two or more kinds of conventionally known CNTs can be used, as appropriate. The CNT may be a single-layer carbon nanotube with a structure in which one layer of graphite is rounded into a tubular shape, or a multilayer carbon nanotube with a structure in which two or more layers of graphite are rounded into a tubular shape. The CNT may include impurities (for example, catalyst or amorphous carbon) derived from a manufacturing method, for example.

In this example embodiment, the CNTs have an average fiber length of 10 µm or more. The CNTs have an average fiber length of preferably 30 µm or more and more preferably 50 µm or more. When the average fiber length is the predetermined value or more, it becomes easy to form a conductive network effectively and the conductivity can be improved. Furthermore, the CNTs have an average fiber length of preferably 100 µm or more, for example more preferably 125 µm or more, still more preferably 200 µm or more, and particularly preferably 250 µm or more. When the average fiber length is long in this manner, the CNTs easily get entangled and aggregate with each other in the aqueous solvent. Therefore, it is particularly effective to apply the techniques disclosed herein.

Moreover, although there is no particular limitation, the CNTs have an average fiber length of preferably generally 1000 µm or less, more preferably 500 µm or less, for example 400 µm or less, and still more preferably 375 µm or less. When the average fiber length is the predetermined value or less, the CNTs will not get entangled easily in the aqueous solvent and the dispersibility of the CNTs can be improved more. Therefore, the effects of the techniques disclosed herein can be achieved easily at a high level and both the dispersibility and the conductivity can be obtained at a high level. Note that the average fiber length of the CNTs can be calculated based on the number-average value obtained by observing a plurality of CNTs with an electron microscope and measuring the length of each CNT in a major-axis direction. More specifically, for example, the average fiber length of the CNTs can be calculated based on the number-average value obtained by the observation performed using a scanning electron microscope (SEM) at a magnification of, for example, 10000 and measuring the lengths of 50 CNTs extracted arbitrarily from the visual field in the major axis direction.

The average outer diameter (average diameter) of the CNTs is not limited in particular and is preferably 3 nm or more, more preferably 5 nm or more, and still more preferably 8 nm or more. When the average outer diameter of the CNTs is the predetermined value or more, even the dispersant with the large weight-average molecular weight as described in this example embodiment can enter between bundles of the CNTs, so that the aggregation of the CNTs is reduced or prevented easily and the effects of the example embodiments disclosed herein are achieved easily at the high level. Eventually, at the time of dispersion, excess stress is not easily applied on the CNTs and the CNTs are not cut easily; thus, the aforementioned average fiber length can be kept easily.

The average outer diameter of the CNTs is preferably 100 nm or less, more preferably 50 nm or less, still more preferably 20 nm or less, and particularly preferably 10 nm or less. When the average outer diameter of the CNTs is the predetermined value or less, the number of CNTs per unit mass increases, so that the conductive network can be formed efficiently. Thus, the conductivity can be improved more. Note that the average outer diameter of the CNTs can be calculated based on the number-average value obtained by observing the plurality of CNTs with the electron microscope and measuring the length of each CNT in a minor-axis direction. More specifically, for example, the average outer diameter of the CNTs can be calculated based on the number-average value obtained by the observation performed using a transmission electron microscope (TEM) at a magnification of, for example, 400000 and measuring the lengths of 50 CNTs extracted arbitrarily from the visual field in the minor axis direction.

The aspect ratio (average fiber length/average outer diameter) of the CNTs is not limited in particular and is preferably 100 to 100000, more preferably 1000 to 50000, and still more preferably 5000 to 25000. When the aspect ratio is in the aforementioned range, the effects of the example embodiments disclosed herein can be achieved easily at a high level and both the dispersibility and the conductivity can be obtained at a high level.

In the Raman spectrum measured in accordance with laser Raman spectroscopy using a semiconductor laser, a ratio (I_{G}/I_{D}) of an intensity I_{G} of a G band appearing around 1580 cm⁻¹ to an intensity I_{D} of a D band appearing around 1350 cm⁻¹ is preferably generally 10 or less, for example, more preferably 1 to 8, and in some example embodiments, still more preferably 1 to 2. The G band is the peak derived from a crystal structure of the CNT and the D band is the peak derived from a defect structure of the CNT. Therefore, as the ratio (I_{G}/I_{D}) is larger, the crystallinity is higher and the higher conductivity can be achieved. When the ratio (I_{G}/I_{D}) is the predetermined value or less, the dispersibility of the CNTs can be improved more.

When the entire CNT dispersion liquid is 100 mass%, the concentration of the CNTs is preferably generally 0.01 to 10 mass%, although there is no particular limitation. The concentration of the CNTs is more preferably 0.1 mass% or more, for example, 0.2 mass% or more, 0.3 mass% or more, and still more preferably 0.4 mass% or more. When the concentration of the CNTs is the predetermined value or more, it becomes easy to form the conductive network effectively and the conductivity can be improved. On the other hand, the CNTs easily get entangled and aggregate with each other in the aqueous solvent. Therefore, it is particularly effective to apply the example embodiments disclosed herein. The concentration of the CNTs is more preferably 5 mass% or less, for example, 2 mass% or less, and still more preferably 1 mass% or less. When the concentration of the CNTs is the predetermined value or less, the CNTs get close to each other less easily and moreover, the effects of the example embodiments disclosed herein are achieved easily at the high level. Accordingly, the dispersibility of the CNTs can be improved more.

The aqueous solvent is a dispersion medium to disperse at least the CNTs. The aqueous solvent is typically water, and may be, for example, a mixed solvent including one kind or two or more kinds of organic solvents that are blended with water in accordance with the application of the CNT dispersion liquid, or the like. The water is preferably ion exchange water, distilled water, ultrafiltered water, reverse osmosis water, or the like from the viewpoint of preventing the mixture of impurities. As the organic solvent that is blended with water, an organic solvent that is uniformly mixed with water, such as alcohol, ether, ketone, or lower carboxylic acid, can be used. The aqueous solvent is preferably formed of water mainly (component that occupies 50 mass% or more), and is formed of water more preferably by 80 mass% or more and still more preferably by 95 mass% or more, and it is particularly preferable that the aqueous solvent be substantially formed of water (98 mass% or more be water).

The dispersant is a component that disperses the CNTs in the aqueous solvent. In this example embodiment, the dispersant is a compound that is soluble in the aqueous solvent to be used. As the dispersant, the dispersant that is soluble in the aqueous solvent and satisfies the weight-average molecular weight to be described below (a weight-average molecular weight of 600000 or more) may be used without particular limitations, and one kind or two or more kinds of the conventionally known compounds can be used as appropriate in accordance with the application of the CNT dispersion liquid, the kind of aqueous solvent, or the like. The dispersant can be typically a water-soluble polymer including at least one kind of functional group selected from a cationic group, an anionic group, and a nonionic group in a molecule. Note that, in this specification, the term "being soluble" refers to having a solubility of 1 mass% or more in the aqueous solvent to be used under an environment of 25°C.

The water-soluble polymer may be any of a homopolymer, a block copolymer, an alternate copolymer, a random copolymer, and a graft copolymer. The molecular structure of the water-soluble polymer may be any of (1) a straight chain type with a linear shape, (2) a branched chain type in which one or a plurality of side chains (carbon chain branched from a main chain, which similarly applies to the description below, such as a graft chain) are connected to a main skeleton with a linear shape (carbon chain whose carbon number is the maximum, which similarly applies to the description below), and (3) a comb type in which a plurality of side chains are regularly arranged along a main skeleton. Among those above, the straight chain type is preferable because the effects of the example embodiments disclosed herein can be achieved at the high level.

The water-soluble polymer can include, for example in the repeating unit, a functional group such as a hydroxy group, a carboxy group, a sulfo group, an amino group, a nitro group, or an acyloxy group, an aromatic ring structure, a vinyl structure, an ester structure, an amide structure, a polyoxyalkylene structure, or the like. In particular, a hydroxy group with affinity to water is preferable. Specific examples of the water-soluble polymer include a cellulose derivative, a starch derivative, a polymer including an oxyalkylene unit, a vinyl alcohol polymer, and the like. Among those mentioned above, a cellulose derivative and a starch derivative are preferable and a cellulose derivative is particularly preferable from the viewpoints of safety and the like.

The cellulose derivative includes, as a main repeating unit, a polymer including a β-glucose unit and its derivative, and their salts in general. The cellulose derivative is typically of a straight chain type. The cellulose derivative may be a compound in which the hydroxy group in the β-glucose unit is partially or entirely replaced by an alkoxy group, or its derivative. An alkyl group or an aryl group (R) in the alkoxy group (RO-) may be, partially or entirely, replaced by an ester group such as a carboxyl group, a nitro group, a halogen, or another organic group. As the salt described above, an alkali metal salt such as ammonium salt, lithium salt, or sodium salt is given. Specific examples of the cellulose derivative include methyl cellulose (MC), ethyl cellulose (EC), carboxy methyl cellulose (CMC), carboxy methyl ethyl cellulose (CMEC), hydroxy methyl cellulose (HMC), hydroxy ethyl cellulose (HEC), hydroxy propyl methyl cellulose (HPMC), their modified products, and the like. In particular, CMC is preferable from the viewpoints of the high availability (various grades are available), versatility, and the like.

The starch derivative includes, as a main repeating unit, a polymer including an α-glucose unit and its derivative, and their salts in general. The starch derivative is typically of a straight chain type. Specific examples of the starch derivative include alpha starch, pullulan, carboxy methyl starch, cyclo dextrin, their modified products, and the like.

Examples of the polymer including the oxyalkylene unit include polyethylene oxide (PEO), which is a polymer of ethylene oxide (EO), polypropylene oxide (PPO), which is a polymer of propylene oxide (PO), a block copolymer of ethylene oxide (EO) and propylene oxide (PO) or butylene oxide (BO), a random copolymer of EO and PO or BO, their modified products, and the like. Other examples include an esterified product of EO, PO, or BO and a compound with a carboxy group.

The vinyl alcohol polymer is typically a polymer (PVA) including a vinyl alcohol unit (VA unit) as a main repeating unit, and its derivative. The vinyl alcohol polymer is typically of a straight-chain type. In the vinyl alcohol polymer, the proportion of the VA units in the entire repeating units is preferably 50 mol% or more and substantially all the repeating units may include the VA units. Specific examples of the vinyl alcohol polymer include polyvinyl alcohol (PVA), polyvinyl butyral (PVB), their modified products, and the like.

The dispersant includes a cellulose derivative (for example, CMC) preferably mainly (component that occupies 50 mass% or more), includes a cellulose derivative (for example, CMC) more preferably by 80 mass% or more, and includes a cellulose derivative (for example, CMC) still more preferably by 95 mass% or more, and it is particularly preferable that the dispersant be substantially formed of a cellulose derivative (for example, CMC) (98 mass% or more be a cellulose derivative (for example, CMC)).

In this example embodiment, the dispersant has a weight-average molecular weight (Mw) of 600000 or more. The dispersant has a weight-average molecular weight of more preferably 650000 or more and still more preferably 670000 or more, for example. When the weight-average molecular weight is the predetermined value or more, the effects of the example embodiments disclosed herein are achieved easily at the high level, which will be described below in detail. The dispersant has a weight-average molecular weight of more preferably 800000 or more and still more preferably 820000 or more, for example. Thus, for example, even when the CNTs have an average fiber length of 100 µm or more or particularly as long as 125 µm or more, the thickening of the CNT dispersion liquid can be reduced or prevented suitably.

In addition, although there is no particular limitation, the weight-average molecular weight of the dispersant is preferably 1000000 or less, more preferably 900000 or less, and still more preferably 850000 or less. When the weight-average molecular weight is the predetermined value or less, the dispersant easily enters between the bundles of the CNTs, so that the dispersibility of the CNTs can be improved more. Furthermore, the conductivity of the CNTs is not easily interrupted and the high conductivity is achieved easily. Note that the weight-average molecular weight of the dispersant can be calculated by comparing the measurement value by gel permeation chromatography (GPC) with a calibration curve based on a reference sample (PEO/PEG). It is more preferable to use the average value obtained by a plurality of (for example, two) measurements as the weight-average molecular weight. Specific measurement conditions will be described in Examples below.

A molecular weight distribution (Mw/Mn), which is the ratio of the weight-average molecular weight (Mw) to the number-average molecular weight (Mn), of the dispersant is preferably generally 3 to 6, more preferably 4 to 5, and still more preferably 4.0 to 4.5, for example. In addition, the number-average molecular weight (Mn) of the dispersant is preferably generally 100000 or more, more preferably 150000 to 300000, and still more preferably 170000 to 200000, for example, although there is no particular limitation. In this specification, the term "number-average molecular weight" refers to the value measured under the measurement conditions similar to those for the weight-average molecular weight.

In this example embodiment, the content of the dispersant included in the CNT dispersion liquid is 10 to 500 parts by mass relative to 100 parts by mass of the CNTs. Thus, the effects of the example embodiments disclosed herein can be achieved suitably. The content of the dispersant is preferably higher than the amount thereof that is adsorbed on the surface of the CNTs. The content of the dispersant is preferably 50 parts by mass or more, more preferably 80 parts by mass or more, and particularly preferably 100 parts by mass or more relative to 100 parts by mass of the CNTs. The content of the dispersant is particularly preferably more than or equal to the content of the CNTs on the mass basis. Thus, the effects of the example embodiments disclosed herein are achieved easily and stably at the high level.

Although there is no particular limitation, the content of the dispersant is preferably 300 parts by mass or less and more preferably 200 parts by mass or less, and may be 150 parts by mass or less, for example, relative to 100 parts by mass of the CNTs. In the example embodiments disclosed herein, the CNTs can be dispersed at a high degree in the aqueous solvent even if the amount of dispersant to be used is relatively small. Therefore, the conductivity of the CNT is not easily interrupted and the high conductivity is achieved easily.

The concentration of the dispersant can vary depending on the amount and property of the CNTs to be used, the kind of the aqueous solvent to be used, the property of the dispersant, and the like. Therefore, in some example embodiments, when the entire CNT dispersion liquid is 100 mass%, the concentration of the dispersant is preferably generally 0.01 to 10 mass%, although there is no particular limitation. The concentration of the dispersant is more preferably 0.1 mass% or more, for example 0.2 mass% or more, and still more preferably 0.3 mass% or more. When the concentration of the dispersant is the predetermined value or more, the conductive network of the CNTs can be efficiently formed and the high conductivity is achieved easily. On the other hand, the CNTs easily get entangled and aggregate in the aqueous solvent and for this reason, it is particularly effective to apply the example embodiments disclosed herein. Moreover, the concentration of the dispersant is more preferably 5 mass% or less, for example 2 mass% or less, and still more preferably 1 mass% or less. When the concentration of the dispersant is the predetermined value or less, the dispersibility can be improved further and the effects of the example embodiments disclosed herein are achieved easily at the high level. Therefore, when the above range is satisfied, both the dispersibility and the conductivity can be achieved at the high level.

As (D) the additive, one kind or two or more kinds that have conventionally been known to be usable for this kind of application can be used as appropriate for the purpose of improving characteristics of the CNT dispersion liquid, for example. Specific examples of the additive include organic additives such as a dispersant with a weight-average molecular weight of less than 600000, an organic binder, an antioxidant, a defoaming agent, an antiseptic agent, a plasticizing agent, and a coloring agent (pigment, dye, or the like), a (non-fibrous) carbon material other than the CNT, such as carbon black or graphite, a metal oxide, and the like.

In the case where the CNT dispersion liquid includes the optional component, the content of the optional component (for example, (D) the additive) included in the CNT dispersion liquid is typically less than the content of the CNTs and/or the content of the dispersant. In one example, when the entire CNT dispersion liquid is 100 mass%, the concentration of the additive is preferably 5 mass% or less, more preferably 3 mass% or less, particularly 2 mass% or less, and still more preferably 1 mass% or less.

The CNT dispersion liquid as described above can be prepared by mixing (A) the CNTs, (B) the aqueous solvent, (C) the dispersant, and other optional component and dispersing or dissolving the CNTs, the dispersant, and the other optional component in the aqueous solvent. The CNTs and the dispersant may be input into the aqueous solvent entirely at one time or separately in two or more times. The mixing may be suitably performed using, for example, a conventionally known mixing device such as a disperser, a planetary mixer, a kneader, a propeller stirrer, an ultrasonic homogenizer, a magnetic stirrer, a jet mill, a ball mill, a bead mill, or a sand mill.

In some example embodiments, when the entire solid content of the CNT dispersion liquid is 100 mass%, (A) the CNTs occupy generally 50 mass% or more, preferably 80 mass% or more, more preferably 90 mass% or more, and still more preferably 95 mass% or more, and it is particularly preferable that the CNT dispersion liquid be substantially formed of the CNTs (98 mass% or more of the entire solid content be the CNTs). In such a case, it is particularly effective to apply the example embodiments disclosed herein. Note that the term "solid content" described here refers to the solid content that is separated (for example, filtered) by solid-liquid separation from the CNT dispersion liquid under the 25°C environment. In other words, the solid content is a component that is dispersed or precipitated in the solvent under the 25°C environment and does not include the component that is dissolved in the solvent.

The CNT dispersion liquid disclosed herein can be used in various applications. For example, in the application of forming an electrode (positive electrode and/or negative electrode) of a secondary battery, the CNT dispersion liquid disclosed herein is provided (typically, applied) on a base material and dried, so that a conductive film can be formed on the base material.

Therefore, as another example embodiment of the present disclosure, a manufacturing method for a conductive film including a step of applying the CNT dispersion liquid and a step of removing the aqueous solvent by drying the carbon nanotube dispersion liquid applied on the base material is provided. In this case, the CNT dispersion liquid may include an active material (positive electrode active material or negative electrode active material) and a resin binder. As the active material and the resin binder, various kinds of materials that have been conventionally known as being usable for this kind of application can be used as appropriate.

As described above, the CNT dispersion liquid according to this example embodiment includes (A) the CNTs with an average fiber length of 10 µm or more, (B) the aqueous solvent, and (C) the dispersant that is soluble in the aqueous solvent and has a weight-average molecular weight of 600000 or more, in which the content of the dispersant is 10 parts by mass or more and 500 parts by mass or less relative to 100 parts by mass of the CNTs.

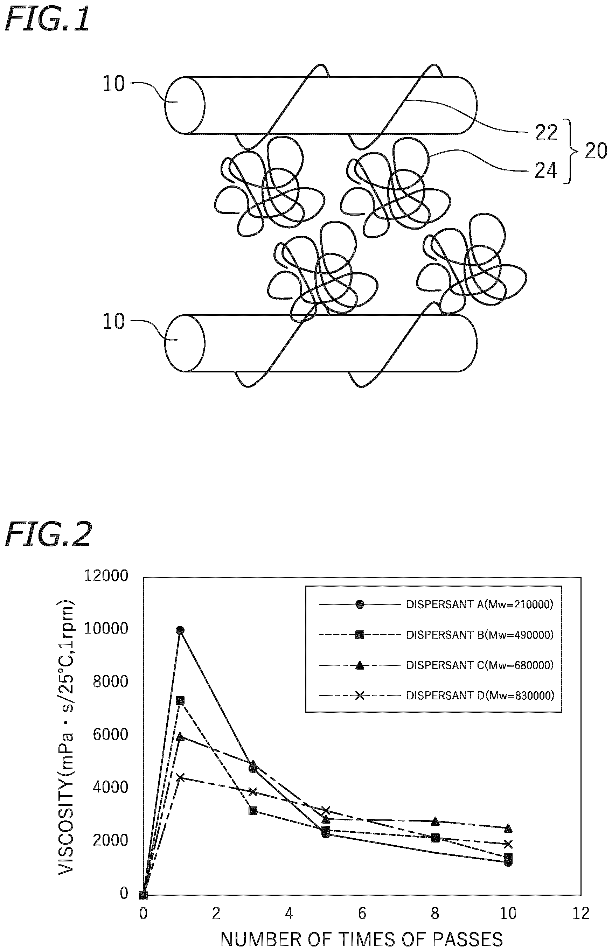

Thus, as compared to the case in which a dispersant that does not satisfy the aforementioned weight-average molecular weight (specifically, a dispersant that is insoluble in the aqueous solvent or has a weight-average molecular weight of less than 600000) is present with (A) the CNTs with an average fiber length of 10 µm or more, for example, the aggregation of the CNTs can be reduced or prevented relatively and the dispersibility of the CNTs can be improved. As a result, the thickening of the CNT dispersion liquid, in particular, the sudden thickening of the CNT dispersion liquid in an initial stage of the dispersion process can be suitably reduced or prevented as can be understood from FIG. 2. In the end, the efficient dispersion process becomes possible, so that the application of excess stress on the CNTs in the dispersion process that results in the shortening of the CNTs or lower crystallinity of the CNTs can be reduced or prevented. Thus, the dispersion stability is excellent and the high conductivity can be achieved, and in these points, the combination of (A) to (C) disclosed herein can be said to be more advantageous.

Note that although the limited interpretation is not intended in particular, the present inventors have considered the effects from the use of (C) the dispersant as follows. FIG. 1 is a schematic diagram of the CNT dispersion liquid (CNTs 10 and a dispersant 20) for describing the effects of the example embodiments disclosed herein. That is to say, as illustrated in FIG. 1, in the CNT dispersion liquid, the dispersant 20 can have a state 22 of being attached to a surface of the CNT 10 and a state 24 of being dissolved (or dispersed) in the aqueous solvent and held between the CNTs 10. The state 22 and the state 24 can be used by separate polymers of the dispersant 20 independently, or a portion of the same molecule in the dispersant 20 can be attached to the surface of the CNT to obtain the state 22 and the other portions can be exposed to the aqueous solvent to obtain the state 24. The dispersant in the state 24 of being dissolved or dispersed in the aqueous solvent tends to have a spherical shape and a larger size stereoscopically as the polymerization degree is higher. Therefore, the weight-average molecular weight is larger. That is to say, as the weight-average molecular weight is larger, the volume in the aqueous solvent tends to become larger. Then, when the stereoscopic size of the dispersant is larger in this way, the steric repulsion between the CNTs 10 tends to occur as illustrated in FIG. 1. Therefore, the CNTs 10 do not easily get close to each other and the dispersibility of the CNTs 10 can be improved relatively. Thus, it is considered that the thickening of the CNT dispersion liquid can be reduced or prevented.

In the CNT dispersion liquid in this example embodiment, the average fiber length of the CNTs is 500 µm or less. This makes it difficult for the CNTs to get entangled and the dispersibility of the CNTs can be improved further. Accordingly, the effects of the example embodiments disclosed herein can be achieved easily at the high level and both the dispersibility and the conductivity can be achieved at the high level.

In the CNT dispersion liquid in this example embodiment, the average fiber length of the CNTs is 100 µm or more. This makes it easy to form the conductive network effectively and the conductivity can be improved. In the case where the average fiber length of the CNTs is long in this manner, the CNTs easily get entangled and aggregate in the aqueous solvent. Therefore, it is particularly effective to apply the example embodiments disclosed herein.

In the CNT dispersion liquid in this example embodiment, the weight-average molecular weight of the dispersant is 1000000 or less. Thus, the dispersant easily enters between the bundles of the CNTs, so that the dispersibility of the CNTs can be improved more. In addition, the conductivity of the CNT is not interrupted easily and the high conductivity is achieved easily.

In the CNT dispersion liquid in this example embodiment, the weight-average molecular weight of the dispersant is 800000 or more. Thus, the effects of the example embodiments disclosed herein can be achieved easily at the high level and for example, even when the CNTs have an average fiber length of 100 µm or more or particularly as long as 125 µm or more, the thickening of the CNT dispersion liquid can be reduced or prevented suitably.

In the CNT dispersion liquid in this example embodiment, the dispersant includes a cellulose derivative. In particular, the dispersant preferably includes carboxy methyl cellulose.

In the CNT dispersion liquid in this example embodiment, the concentration of the carbon nanotubes is 0.01 mass% or more and 10 mass% or less. When the concentration of the CNTs is the predetermined value or more, the conductive network can be easily formed effectively and the conductivity can be improved. In addition, since the CNTs easily get entangled and aggregate in the aqueous solvent, it is particularly effective to apply the example embodiments disclosed herein. Furthermore, when the concentration of the CNTs is the predetermined value or less, the CNTs do not get close to each other easily and the effects of the example embodiments disclosed herein are achieved easily at the high level. Thus, the dispersibility of the CNTs can be improved more.

In the CNT dispersion liquid in this example embodiment, the concentration of the dispersant is 0.01 mass% or more and 10 mass% or less. When the concentration of the dispersant is the predetermined value or more, the dispersibility of the CNTs can be improved more and the effects of the example embodiments disclosed herein are achieved easily at the high level. In addition, when the concentration of the dispersant is the predetermined value or less, the conductivity of the CNT is not interrupted easily and the high conductivity is easily achieved. Thus, both the dispersibility and the conductivity can be achieved at the high level.

Examples related to example embodiments of the present invention will be described below. However, it is not intended to limit the present invention to the Examples described below.

Here, first, four kinds of CNTs (CNTs 1 to 4) with different average fiber lengths L as shown in Table 1, four kinds of dispersants (dispersants A to D, manufactured by Daicel Miraizu Ltd.) with different molecular weights as shown in Table 2, and water as the aqueous solvent were prepared.

**Table 1: CNTs**

| | Average fiber length L | Average outer diameter |
|---|---|---|
| CNT 1 | 50 µm | 8.89 nm |
| CNT 2 | 125 µm | 8.89 nm |
| CNT 3 | 250 µm | 8.89 nm |
| CNT 4 | 375 µm | 8.89 nm |

**Table 2: Dispersants**

| | Kind | Number-average molecular weight Mn (average value of N = 2) | Weight-average molecular weight Mw (average value of N = 2) | Mw/Mn |
|---|---|---|---|---|
| Dispersant A | CMC DN10L | 63000 | 210000 | 3.3 |
| Dispersant B | CMC DN100L | 130000 | 490000 | 3.8 |
| Dispersant C | CMC DN400H | 170000 | 680000 | 4.0 |
| Dispersant D | CMC DN800H | 200000 | 830000 | 4.2 |

Using gel permeation chromatography (GPC), the molecular weight of the dispersant was measured under the following conditions. Then, by comparing the measurement value with the calibration curve based on the reference sample (PEO/PEG), the weight-average molecular weight and the number-average molecular weight were calculated. The results are shown in Table 2. Note that the reference sample that was used was obtained by mixing two kinds, PEG (Tosoh Corporation) and PEO (Wako Pure Chemical Industries, Ltd.), with the same structure. In addition, Table 2 shows the arithmetic average value when the measurement was conducted twice (N = 2). For example, in the dispersant C, N1 = 670000 and N2 = 690000, which results in an arithmetic average value of 680000. Moreover, in the dispersant D, N1 = 840000 and N2 = 820000, which results in an arithmetic average value of 830000.
Column: TSK gel gurdcolumn PW_{XL} (6.0 mmI.D. × 4 cm) + TSK gel GMPWXL (7.8 mmI.D. × 30 cm) × 2
Column temperature: 40°C
Transition phase: 0.1 M NaNO₃
Flow rate: 1.0 mL/min
Sample concentration: 0.5 mg/mL
Detector: RI (refractive index) detector (polarity (+))

Next, under the 25°C environment, the CNTs and the dispersant, which are the combination shown in Table 3 and Table 4, were added to a raw material tank of a high-pressure homogenizer (STAR BURST HJP-25001V2, manufactured by SUGINO MACHINE LIMITED), and the mixture was subjected to the dispersion process in the aqueous solvent (here, in water), so that the CNT dispersion liquid was prepared. Note that for each CNT dispersion liquid, the content of the dispersant was 100 parts by mass (equivalent) relative to 100 parts by mass of the CNTs and the concentration of each of the CNTs and the dispersant was set to 0.4 mass%. In addition, the dispersion process was performed using a single-nozzle chamber under conditions with a nozzle diameter of 0.15 mm and a pressure of 150 MPa.

Then, the viscosity of the CNT dispersion liquid in the dispersion process was monitored using a viscometer (TV-200E, manufactured by Toki Sangyo Co., Ltd.) at a rotation number of 1 rpm, and the peak value of the viscosity (mPa·s, typically the initial viscosity) was recorded. The results are shown in Table 3 and Table 4. Note that, in Tables, the column of "relative value" represents the relative value when the peak value (absolute value) in the case of using the dispersant A is 100, and the column of "evaluation" represents the result in accordance with criteria below.
P (poor): The relative value is more than 70.
G (good): The relative value is 70 or less and more than 55.
E (excellent): The relative value is 55 or less.

**Table 3: Comparison 1 in viscosity and structure of CNT dispersion liquids**

| | Mw | CNT 1 (L = 50 µm) | | | CNT 2 (L = 125 µm) | | |
|---|---|---|---|---|---|---|---|
| | | Absol ute val ue (mPa· s) | Relati ve value | Evalua tion | Absolu te valu e (mPa·s ) | Relati ve value | Evalua tion |
| Dispers ant A | 2100 00 | 8965 | 100 (refer ence) | - | 8520 | 100 (refer ence) | - |
| Dispers ant B | 4900 00 | 6755 | 75 | P | 8074 | 95 | P |
| Dispers ant C | 6800 00 | 5382 | 60 | G | 5669 | 67 | G |
| Dispers ant D | 8300 00 | 5641 | 63 | G | 4046 | 47 | E |

**Table 4: Comparison 2 in viscosity and structure of CNT dispersion liquids**

| | Mw | CNT 3 (L = 250 µm) | | | CNT 4 (L = 375 µm) | | |
|---|---|---|---|---|---|---|---|
| | | Absol ute valu e (mPa· s) | Relativ e value | Evaluat ion | Absol ute valu e (mPa· s) | Relativ e value | Evaluat ion |
| Dispers ant A | 2100 00 | 9900 | 100 (refere nce) | - | 8069 | 100 (refere nce) | - |
| Dispers ant B | 4900 00 | 7330 | 74 | P | 7543 | 93 | P |
| Dispers ant C | 6800 00 | 5929 | 60 | G | 4112 | 51 | E |
| Dispers ant D | 8300 00 | 4404 | 44 | E | 4358 | 54 | E |

As shown in Tables 3 and 4, the thickening of the CNT dispersion liquid was remarkable when the dispersant A with a weight-average molecular weight of 210000 was used. In addition, when the dispersant B with a weight-average molecular weight of 490000 was used, the reduction of the viscosity was confirmed to some extent but the viscosity was still high.

With respect to these comparative examples, when the dispersants C and D with a weight-average molecular weight of 600000 or more were used, the reduction of the viscosity increased relatively and the thickening of the CNT dispersion liquid was reduced or prevented well. In particular, in the case of using the CNTs with an average fiber length L of 125 µm or more and using the dispersant D with a weight-average molecular weight of 800000 or more, the thickening of the CNT dispersion liquid was reduced or prevented in particular. FIG. 2 expresses the viscosity of the CNT dispersion liquid in the case of using the CNT 3 (CNTs with an average fiber length L of 250 µm) as one example. Note that the number of passes along the horizonal axis represents the number of times of circulating the CNT dispersion liquid with the high-pressure homogenizer. The above results indicate the significance of the example embodiments disclosed herein.

## Claims

1. A carbon nanotube dispersion liquid comprising:
carbon nanotubes (10) with an average fiber length of 10 µm or more;
an aqueous solvent; and
a dispersant (20) that is soluble in the aqueous solvent and has a weight-average molecular weight of 600000 or more; wherein
a content of the dispersant (20) is 10 parts by mass or more and 500 parts by mass or less relative to 100 parts by mass of the carbon nanotubes (10).

2. The carbon nanotube dispersion liquid according to claim 1, wherein the carbon nanotubes (10) have an average fiber length of 500 µm or less.

3. The carbon nanotube dispersion liquid according to claim 1 or 2, wherein the carbon nanotubes (10) have an average fiber length of 100 µm or more.

4. The carbon nanotube dispersion liquid according to any one of claims 1 to 3, wherein the dispersant (20) has a weight-average molecular weight of 1000000 or less.

5. The carbon nanotube dispersion liquid according to any one of claims 1 to 4, wherein the dispersant (20) has a weight-average molecular weight of 800000 or more.

6. The carbon nanotube dispersion liquid according to any one of claims 1 to 5, wherein the dispersant (20) includes a cellulose derivative.

7. The carbon nanotube dispersion liquid according to any one of claims 1 to 6, wherein the dispersant (20) includes carboxy methyl cellulose.

8. The carbon nanotube dispersion liquid according to any one of claims 1 to 7, wherein the carbon nanotubes (10) have a concentration of 0.01 mass% or more and 10 mass% or less.

9. The carbon nanotube dispersion liquid according to any one of claims 1 to 8, wherein the dispersant (20) has a concentration of 0.01 mass% or more and 10 mass% or less.
